# EUROPEAN PATENT SPECIFICATION

(11) **EP 4 466 647 B1**
(45) Date of publication and mention of the grant of the patent: **19.08.2026**
(21) Application number: 23700533.5
(22) Date of filing: 16.01.2023
(51) Int. Cl.: G06Q 10/063

(54) **SYSTEM FOR ESTIMATING THE CARBON DIOXIDE EMISSION OF AN INDIVIDUAL VEHICLE DELIVERY OF TANGIBLE GOODS TO A SPECIFIC ADDRESS**
SYSTEM ZUR SCHÄTZUNG DER KOHLENDIOXID-EMISSIONEN EINER EINZELNEN FAHRZEUGLIEFERUNG VON MATERIELLEN GÜTERN AN EINE BESTIMMTE ADRESSE
SYSTÈME D'ESTIMATION DE L'ÉMISSION DE DIOXYDE DE CARBONE D'UN VÉHICULE INDIVIDUEL LIVRAISON DE BIENS CORPORELS À UNE ADRESSE SPÉCIFIQUE

(30) Priority: 17.01.2022 DK PA202200040
(43) Date of publication of application: 27.11.2024
(73) Proprietor: Trasolu ApS, 7800 Skive (DK)
(72) Inventor: FLORCZAK, Keld, 8700 Horsens (DK)
(74) Representative: Larsen & Birkeholm A/S
(86) International application number: PCT/EP2023/050803
(87) International publication number: WO 2023/135278

(56) References cited:
- WO-A1-2019/203925

## Description

### Technical field of the invention

The present invention relates to systems for surveying the carbon dioxide emission of vehicle delivered tangible goods.

### Background of the invention

Today, there is an increased interest amongst consumers in knowing what the impact on the environment is of the goods that they purchase. E.g., what is the amount of carbon dioxide emissions generated in producing the product, in delivering the product to a physical store, or in delivering the product directly to the consumer?

Within the field of transportation of tangible goods, the traceability is poor. A freight forwarder may be quite good at keeping track of the individual parcels and the routes may be well-planned as the individual parcels are scanned at intermediate parcel transportation hubs during their travel to the recipient. However, there is little information on the environmental impact on the transport itself. It may be possible to get some data about a hole truckload of products, e.g., how environmentally friendly are the vehicles that are used for the transportation, such as the vehicle's emissions standard, such as Euro 3 or Euro 6. The EU has said that "the air pollutant emissions from transport are a significant contribution to the overall state of air quality in Europe". The aim of Euro emissions standards is to reduce the levels of harmful exhaust emissions, such as Nitrogen oxides (NOx), Carbon monoxide (CO), Hydrocarbons (HC), and Particulate matter (PM). According to Department for Business, Energy & Industrial Strategy (BEIS) stats from 2018, transport still accounted for 33% of all carbon dioxide emissions, with most of this coming from road transport. The details of Euro 7 (not yet implemented) are thus likely to be influenced by European Green Deal targets to reduce carbon dioxide emissions. At present, it is thus difficult to get a realistic estimate of the carbon dioxide emission of an individual vehicle delivery of tangible goods to a specific address. The freight forwarder will try to plan a delivery, but can only take the known data into consideration, which is often fragmented. But the received data is often historical, incomplete, and reported manually, making it impossible to react upon.

Document WO 2019/203925 A1 discloses providing fuel type recommendations to the user of a vehicle.

It is an objective of the present invention to provide system that solves or at least minimizes the above-mentioned problems.

### Summary of the invention

The inventor of the present invention has developed a system, a data capture platform, securing a tamperproof traceability of the carbon dioxide emission of an individual vehicle delivery of tangible goods.

One aspect relates to a system for estimating the carbon dioxide emission of an individual vehicle delivery of tangible goods to a specific address, said vehicle holding multiple tangible goods for different addresses; said system comprising:
- a management component being part of a cloud platform; and
- a master device mounted on said vehicle; wherein said master device comprises:
   a) a memory that stores executable components; and
   b) a processor, operatively coupled to said memory,

said executable components comprising:
   i) a data collection and processing component configured to interface with an on-board diagnostic computer in said vehicle and/or configured to interface with one or more of sensors mounted on said vehicle; and
   ii) a wireless communications component being communicatively coupled to said management component over a network and configured to transmit logged data from said data collection and processing component to said management component;
wherein said on-board diagnostic computer and/or said sensors are configured to monitor a set of operational parameter values of said vehicle; said operational parameters comprising:
   - real time weight of the vehicle;
   - real time energy source, such as fuel or electricity, consumption;
   - real time type of energy source consumption;
   - real time velocity of the vehicle;
   - real time distance traveled by vehicle from last recorded stop; and
   - optionally, real time distance traveled by vehicle from start of journey;
wherein said data collection and processing component is further configured to compute, based on said received data, a carbon dioxide emission of an individual vehicle delivery of tangible goods and to log data comprising said calculations.

### Brief description of the figures

Figure 1 shows the general aspect of the present invention.
Figure 2 shows a master device in accordance with various embodiments of the present invention.
Figure 3 shows a data processing component in accordance with various embodiments of the present invention.

### Detailed description of the invention

Over time, a vehicle has evolved from an electro-mechanical device to a complex mechatronics system having a wide range of computer components integrated into the vehicle. For instance, the components may sense and store operational data on an on-board computer (i.e., emissions data, real time energy source, such as fuel or electricity, consumption, real time velocity of the vehicle, etc.). Such data may be useful for purposes of determining the carbon dioxide emission, although other sensors may be needed.

At present, it is thus difficult to get a realistic estimate of the carbon dioxide emission of an individual vehicle delivery of tangible goods to a specific address. The inventor of the present invention has developed a system, a data capture platform, securing a tamperproof traceability of the carbon dioxide emission of an individual vehicle delivery of tangible goods. The system comprises a management component, and a master device. The management component is part of a cloud platform. Any logged data is preferably continuously sent to the cloud platform only accessible by management. The data capture platform thereby secures a tamperproof traceability. Herein, the term "management component" may be software, firmware, middleware, microcode, hardware, and/or any combination thereof. For example, the management component or the manager may be any one or a combination of a module, a process, and a thread that are run on a general-purpose server or may be a general-purpose server. There may be one or more management components or managers. The management component or the manager may be located on one general-purpose server or may be distributed on at least two general-purpose servers. The management component or the manager may be obtained from a computer readable medium that stores various data structures and then is executed or may be implemented by using various logical combinations of a hardware circuit. The term "cloud platform" as used herein is intended to be broadly construed, so as to encompass a computer, server or backend device coupled to a network, and should not be viewed as requiring any particular geographical relationship relative to the master devices for which it is responsible.

The master device is mounted on the vehicle and comprises a memory that stores executable components, and a processor, operatively coupled to the memory. In the present context, the term "master device" refers to a specific communication device, which is capable of collecting data from other devices, analyze the collected data and generate new data, e.g., by computation, log collected and generated data, and communicate the data to the management component over a network.

The master device's executable component comprises a data collection and processing component configured to interface with an on-board diagnostic computer in the vehicle and/or configured to interface with one or more of sensors mounted on the vehicle. The term "data collection and processing component" as used herein means a system implemented at least in part by hardware and comprising an input device, an output device, and a processor connected to the input device to receive data from it and connected to the output device to provide data processed for it. The data collection and processing component may be configured to acquire operational data from the vehicle by connecting to the vehicle's 16-cavity electrical connector (called an OBD-II connector for vehicles made after 1996). The OBD (On-Board Diagnostic) connector is typically located under the vehicle's dashboard on the driver's side. Data transferred through the connector to the data collection and processing component yields data that identify a status of the vehicle, and possible also of the trailer or semi-trailer, and whether a specific component of the vehicle has malfunctioned. These data are used by the data collection and processing component to determine and/or calculate the baseline behavior pattern. In the present context the terms "OBD" and "OBD-II" will be used interchangeably throughout the application unless otherwise specified.

Some manufacturers include complex electronic systems in their vehicles to access and analyze the above-described data. These systems are not connected through the OBD-II connector, but instead are wired directly to the vehicle's electronic system. This wiring process typically takes place when the vehicle is manufactured. In some cases, these systems transmit data through a wireless network. In such situations, the data collection and processing component may be configured to wirelessly acquire the operational data.

The data-collection component may be configured to communicate with an on-board diagnostic computer using the specific protocol of the on-board diagnostic computer. In order to determine the proper protocol to access certain types of data, the data-collection component may require the year, manufacturer, make, model, or related information. This information may be made available via the management component.

As an example, an in order for the data collection and processing component to operate, the data collection and processing component may comprise a computing system including a processor, a memory, a communication unit, an output device, an input device, and a data store, which may be communicatively coupled by a communication bus. The mentioned computing system should be understood as an example and that it may take other forms and include additional or fewer components without departing from the scope of the present disclosure. For instance, various components of the computing device may be coupled for communication using a variety of communication protocols and/or technologies including, for instance, communication buses, software communication mechanisms, computer networks, etc. The computing system may include various operating systems, sensors, additional processors, and other physical configurations. The processor, memory, communication unit, etc., are representative of one or more of these components. The processor may execute software instructions by performing various input, logical, and/or mathematical operations. The processor may have various computing architectures to method data signals (e.g., CISC, RISC, etc.). The processor may be physical and/or virtual and may include a single core or plurality of processing units and/or cores. The processor may be coupled to the memory via the bus to access data and instructions therefrom and store data therein. The bus may couple the processor to the other components of the computing system including, for example, the memory, the communication unit, the input device, the output device, and the data store. The memory may store and provide data access to the other components of the computing system. The memory may be included in a single computing device or a plurality of computing devices. The memory may store instructions and/or data that may be executed by the processor. For example, the memory may store instructions and data, including, for example, an operating system, hardware drivers, other software applications, databases, etc., which may implement the techniques described herein. The memory may be coupled to the bus for communication with the processor and the other components of computing system. The memory may include a non-transitory computer-usable (e.g., readable, writeable, etc.) medium, which can be any non-transitory apparatus or device that can contain, store, communicate, propagate, or transport instructions, data, computer programs, software, code, routines, etc., for processing by or in connection with the processor. In some implementations, the memory may include one or more of volatile memory and non-volatile memory (e.g., RAM, ROM, hard disk, optical disk, etc.). It should be understood that the memory may be a single device or may include multiple types of devices and configurations. The input device may include any device for inputting information into the computing system. In some implementations, the input device may include one or more peripheral devices. The output device may be any device capable of outputting information from the computing system. The data store may include information sources for storing and providing access to data. In some implementations, the data store may store data associated with a database management system (DBMS) operable on the computing system. For example, the DBMS could include a structured query language (SQL) DBMS, a NoSQL DMBS, various combinations thereof, etc. In some instances, the DBMS may store data in multi-dimensional tables comprised of rows and columns, and manipulate, e.g., insert, query, update and/or delete, rows of data using programmatic operations. The data stored by the data store may be organized and queried using various criteria including any type of data stored by them. The data store may include data tables, databases, or other organized collections of data. The data store may be included in the computing system or in another computing system and/or storage system distinct from but coupled to or accessible by the computing system. The data stores can include one or more non-transitory computer-readable mediums for storing the data. In some implementations, the data stores may be incorporated with the memory or may be distinct therefrom. The components may be communicatively coupled by the bus and/or the processor to one another and/or the other components of the computing system. In some implementations, the components may include computer logic (e.g., software logic, hardware logic, etc.) executable by the processor to provide their acts and/or functionality. These components may be adapted for cooperation and communication with the processor and the other components of the computing system. The data collection and processing component is configured to compute, based on said received data, a carbon dioxide emission of an individual vehicle delivery of tangible goods and to log data comprising said calculations.

The on-board diagnostic computer and/or sensors are configured to monitor a set of operational parameter values of the vehicle. These operational parameters are many, but the following operational parameters are particularly interesting for determining the carbon dioxide emission of an individual vehicle delivery of tangible goods, such as e.g., real time weight of the vehicle, real time energy source, such as fuel or electricity, consumption, real time type of energy source consumption, real time velocity of the vehicle, real time distance traveled by the vehicle from last recorded stop, and real time distance traveled by the vehicle from start of journey.

An example of an algorithm to compute the carbon dioxide emission of an individual vehicle delivery of tangible goods may be as follows. First, the data collection and processing component determines when the delivery is initiated and processed. This may be done by extracting information about the real time velocity of the vehicle, i.e., the time that the delivery has taken is estimated to be the time from one identified stop to another identified stop. The stops must be of a length corresponding to the time it takes to unload a delivery (e.g., the parcels, the machine, or other tangible goods). Baseline data for such time lengths may e.g., be fed to the data collection and processing component from the management component. Alternatively, or in combination, the driver of the vehicle indicates to the data collection and processing component and/or to the management component when a delivery has been unloaded. In the latter situation, the management component then subsequently informs the data collection and processing component, e.g., via a wireless communications component (described later). The identified stops may also be confirmed by data about the real time distance traveled by the vehicle from the last recorded stop, and/or data about the real time distance traveled by the vehicle from the start of journey, as well as by data about the expected distance to travel for the delivery to be completed. The latter data may be provided by the management component.

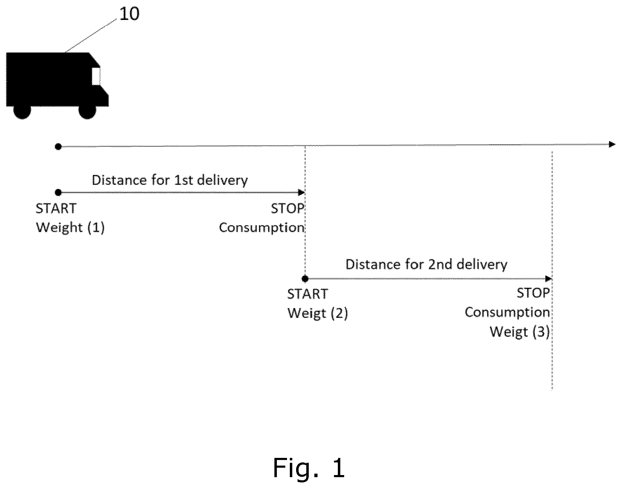

Once the time frame has been determined, the data collection and processing component identifies and determines the consumption of energy source(s) within that time frame. This may be accomplished from data about the real time energy source, such as fuel or electricity, consumption, and data about real time type of energy source consumption. The data collection and processing component is fed with data about the carbon dioxide emission per unit (e.g., volume, weight, or kilowatt hour). A hybrid vehicle may use different types of energy sources within the identified time frame. Hence, in this situation, it is important that the data collection and processing component is aware of the real time type of energy source consumption. From these data, the data collection and processing component can compute the carbon dioxide emission of an individual vehicle delivery of tangible goods. However, as the vehicle carries tangible goods for different destinations, it is still difficult to precisely estimate the carbon dioxide emission of an individual vehicle delivery of tangible goods as the total weight is reflected in the current calculation. To provide a better estimate, the real time weight of the vehicle may be used to determine the weight of the individual vehicle delivery of tangible goods, which is the weight "loss" of the total vehicle after the vehicle delivery has been unloaded (see Figure 1). In this way, the individual vehicle delivery's weight portion of the total weight of all vehicle deliveries on the planned route is used to weigh each individual delivery's contribution to the carbon dioxide emission on the planned route. These data are then logged and preferably time stamped.

The master device also comprises a wireless communications component being communicatively coupled to the management component over a network and configured to transmit logged data from said data collection and processing component to said management component. In the present context, the term "wireless communications component" may denote any electronic device, which can control, perform, and/or participate in a contactless communication, wherein data are transferred in a wireless manner. The wireless communications component may be a component within a housing. Alternatively, the wireless communications component may be a bare die or a chip. Further, the wireless communications component may comprise appropriate electric circuits, such as a transmitting circuit and/or a receiving circuit.

If the vehicle is coupled to a trailer or a semi-trailer, the total weight of the vehicle during the planned route may have to be adjusted, as the trailer or semi-trailer, in some circumstances, is decoupled from the vehicle along the route. This information is normally possible to extract from the on-board diagnostic computer in the vehicle. Alternatively, a slave device may be mounted on the trailer or semi-trailer. The master device may be paired with the slave device and then transmit or receive information to or from the selected slave device. The term 'slave device' refers to communication devices controlled by a master device in a given communication system. Specifically, each individual slave device transmits or receives information to or from a master device, depending on the selection of the master device. The term "slave device" may be replaced with the term "terminal", and the term "master device" may be replaced with the term "base station apparatus" or "access point".

In one or more embodiments, the data collection and processing component is configured to couple said logged data a) with a code for said tangible goods.

In one or more embodiments, the data collection and processing component is configured to couple said logged data b) with a code for said vehicle, such as the VIN, license plate, or an arbitrary code made by the user and/or with a code for the driver of said vehicle.

In one or more embodiments, the data collection and processing component is configured to receive information from said management component about an expected carbon dioxide emission of an individual vehicle delivery of tangible goods to a specific address.

The freight forwarder may be interested in optimizing the carbon dioxide emission of an individual vehicle delivery of tangible goods to a specific address. One way of handling this problem is to instruct the driver of the vehicle to drive as environmentally correct as possible. The present invention provides for a method for supporting the driver during the route. The data collection and processing component may be configured to determine, based on real time operational parameters regarding the forward travel of the vehicle, a position of the vehicle along the route of the vehicle delivery at which a retardation of the vehicle under the action of engine brake or free running of said vehicle is to occur. Similarly, the data collection and processing component may further be configured to determine, based on real time operational parameters regarding the forward travel of the vehicle, a position of the vehicle along the route of the vehicle delivery at which an elimination of said retardation of the vehicle under the action of engine brake or free running of said vehicle is to occur. The real time operational parameters may e.g., be real time engine revolutions per minute, real time air resistance, real time rolling resistance, real time cartographic data about the route of the vehicle, and/or real time weather conditions along the route of the vehicle.

In one or more embodiments, the on-board diagnostic computer and/or said sensors are further configured to monitor a set of operational parameter values of said vehicle; said operational parameters comprising:
- real time engine revolutions per minute;
- real time air resistance;
- real time rolling resistance;
- real time cartographic data about the route of the vehicle; and/or
- real time weather conditions along the route of the vehicle;
wherein said data collection and processing component, in order to reduce the carbon dioxide emission of an individual vehicle delivery of tangible goods to a specific address, is configured to determine, based on said real time operational parameters regarding the forward travel of the vehicle, a position of the vehicle along the route of the vehicle delivery at which a retardation of the vehicle under the action of engine brake or free running of said vehicle is to occur; wherein said data collection and processing component is further configured to determine, based on said real time operational parameters regarding the forward travel of the vehicle, a position of the vehicle along the route of the vehicle delivery at which an elimination of said retardation of the vehicle under the action of engine brake or free running of said vehicle is to occur.

The set operational parameters may include information about the current gear of the vehicle. The vehicle may comprise a gear determining means adapted for determining the current gear of the vehicle, including the neutral gear for free running. The gear determining means may comprise any suitable sensor elements for determining the current gear.

The vehicle may comprise a rolling resistance determining means for determining the rolling resistance of the vehicle. The rolling resistance determining means may comprise vehicle-specific characteristics consisting of a rolling resistance constant, wherein the rolling resistance constant is determined by estimation, and/or by means of a learning process in which the real time rolling resistance is measured under specific conditions and compared with the estimated rolling resistance. The rolling resistance may also be estimated from the total number of axels of the vehicle, including axels of the trailer or semi-trailer.

The real time weight of the vehicle may be obtained from sensors, such as axle load sensors designed for axle load control and cargo weight control. An axle load sensor can be fitted on any vehicle with air or spring suspension. The axle load sensor may e.g., be a pressure sensor used to determine the axle load in vehicles equipped with air suspension. Alternatively, the axle load sensor may e.g., be a position sensor designed for measuring axle and cargo load on vehicles with leaf spring suspension. Such sensors are commercially available.

In one or more embodiments, the system further comprises a display component, such as a touch screen or stylus-activated screen, adapted for being worn by a user and/or for being mounted in the driver compartment of said vehicle; said display configured for displaying an instruction from said data collection and processing component about when the user should either activate or eliminate a user action on retardation of the vehicle, said action using engine brake or free running of said vehicle, thereby reducing the carbon dioxide emission of an individual vehicle delivery of tangible goods to a specific address.

In one or more embodiments, the position of the vehicle along the route of the vehicle delivery at which a retardation of the vehicle under the action of engine brake or free running of said vehicle is to occur includes positions a) close to a zone where a lower speed limit is required, b) close to road curves, c) close to a roundabout, and/or d) close to zones with the presence of speed cameras.

In one or more embodiments, the management component is configured to decide which master device is to be paired with which slave unit and to send such instructions to a given master device. Preferably, the master device, when coupled to a vehicle's power system, is configured to change its wireless communications component from being in a low power listening mode (sleep mode) to be in a first active mode comprising:
- listening for and receiving a signal from said management component with instructions about a slave unit to be paired with; and
- listening for and receiving a signal from the instructed slave unit to be paired with.

In one or more embodiments, the master device comprises a power interface adapted for receiving a power cable. The master device, when paired with a slave unit, may further be configured to open said power interface, thereby being adapted to deliver power to said slave. Preferably, the master device, when paired with a slave unit, is configured to activate its data collection and processing component.

In one or more embodiments, the master device, e.g., the data collection and processing component, is configured to couple to an on-board diagnostic port of the vehicle. In one or more embodiments, the master device, e.g., the data collection and processing component, is configured to relay information from the on-board diagnostic computer through a port, preferably identical to the on-board diagnostic port, while coupled to the on-board diagnostic port, such as a standardized digital communications port.

The retrieval of data may be performed at any time and with any frequency, depending on the operational parameter values of interest. Hence, the retrieval of data for some operational parameters may be performed at real time or rapid kilometer intervals (e.g., several times each minute, or every few kilometers). Other operational parameters may only be interesting to retrieve once a day, week, or month, or after many kilometers. The retrieval of data may be performed in response to a signal sent from the management component.

Alternatively, the wireless unit may be configured to automatically perform retrieval of data at predetermined or random time intervals. The predetermined time intervals may preferably be instructed by the management component.

The data collection and processing component may be configured as two individual components - a data collection component and a data processing component, but in other cases the data collection and processing component is a single component. This is merely a matter of construction and is not particularly relevant for the present invention.

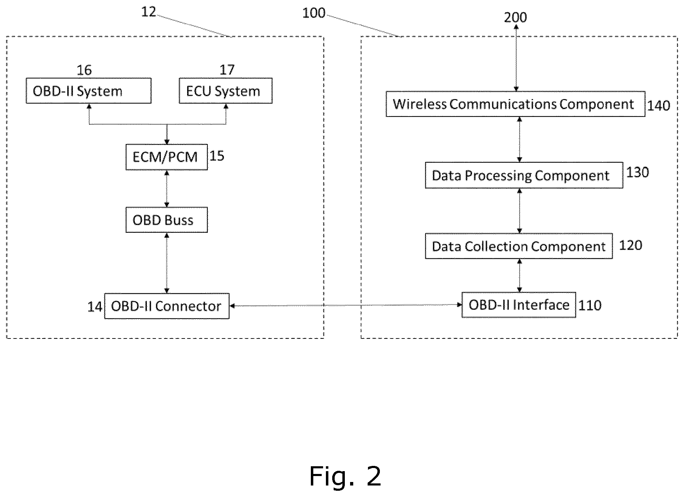

Figure 2 shows a master device 100 in accordance with embodiments of the present invention in electrical contact with a vehicle's on-board diagnostic computer 12. In addition to the OBD-II systems 16, most vehicles manufactured after 1996 have electronic control units (ECUs) that control internal electromechanical actuators. Most ECUs transmit status and diagnostic information over a shared, standardized electronic bus in the vehicle. The bus effectively functions as an on-board computer network with many processors, each of which transmits and receives data. The primary computers in this network are the vehicle's electronic-control module (ECM) 15 and power-control module (PCM) 15. The ECM will typically access computers and microcontrollers that monitor or control engine functions (e.g., the spark controller, or exhaust gas recirculator). The PCM typically controls, or monitors ECUs associated with the vehicle's power train (e.g., its engine, transmission, and braking systems).

The OBD-II system 16 and ECU system 17 connect through a conventional OBD-II connector 14, typically located under the vehicle's dashboard.

The master device 100 may be contained in a portable housing that plugs directly into the OBD-II connector 14 and may be easily installed and replaced. The OBD-II connector 14 has a serial, 16-cavity layout, with specific electrical connections in separate cavities supplying data and electrical power from the OBD/ECU system 16, 17. The OBD-II connector 14 electrically and mechanically matches an OBD-II interface 110 in the master device 100. The OBD-II connector 14 may also pass battery power, vehicle chassis ground, and signal ground from the OBD/ECU system 16, 17 through the OBD-II interface 110 to the data collection component 120, data processing component 130, and wireless communications component 140. Once the data collection component 120 receives the set of operational parameter values, it may be configured to automatically identify, and repeatedly collect a subset of the set of operational parameter values that are monitored by the on-board diagnostic computer and associates said subset of operational parameter values with a preset code for said vehicle 10 and formats it into a data packet. Once properly formatted, the data packet is passed from the data collection component 120 to the data processing component 130 that determines or computes, based on said received data, a carbon dioxide emission of an individual vehicle delivery of tangible goods. The results are logged and formatted into a data packet. Once properly formatted, the data packet is passed from the data processing component 130 to the wireless communications component 140. The wireless communications component 140 transmits the data packet through a conventional wireless antenna over an airlink to the cloud platform 200.

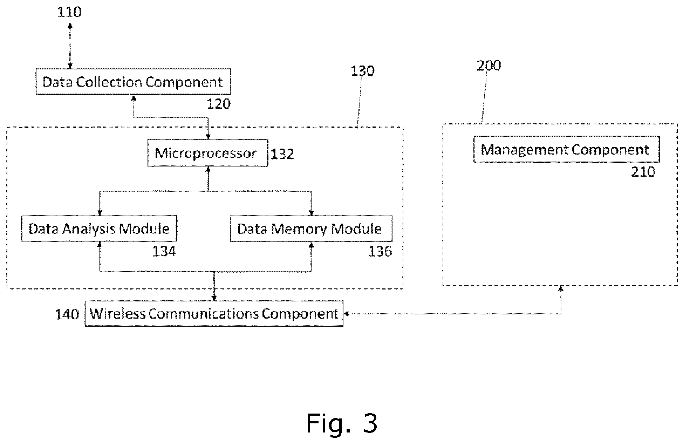

The data processing component 130 may comprise a microprocessor 132, a data-analysis module 134, and a data-memory module 136 (Figure 3). When the data processing component 130 receives the data packet from the data collection component 120, it is received by the microprocessor 132. The microprocessor 132 controls the data-analysis module 134 (e.g., hardware and software for statistical analysis) that process the data packet, and a data-memory module 136 (e.g., a computer memory or database) that stores it. The cloud platform 200 receives the processed data from the data-analysis 134 and data-memory modules 136 and makes it available to the management component 210, e.g., through a network connection.

The term "microprocessor" refers to standard electronic devices (e.g., programmable, silicon-based devices) that can process data.

It should be noted that embodiments and features described in the context of one of the aspects of the present invention also apply to the other aspects of the invention falling within the scope of the appended claims.

### References

- 10: Vehicle
- 12: On-board diagnostic computer
- 14: OBD-II connector
- 15: ECM/PCM
- 16: OBD-II system
- 17: ECU system
- 100: Master device
- 110: OBD-II interface
- 120: Data collection component
- 130: Data processing component
- 132: Microprocessor
- 134: Data-analysis module
- 136: Data-memory module
- 140: Wireless communications component
- 200: Cloud platform
- 210: Management component

## Claims

1. A system for estimating the carbon dioxide emission of an individual vehicle delivery of tangible goods to a specific address, said vehicle holding multiple tangible goods for different addresses; said system comprising:
- a management component being part of a cloud platform; and
- a master device mounted on said vehicle; wherein said master device comprises:
a) a memory that stores executable components; and
b) a processor, operatively coupled to said memory,
said executable components comprising:
i) a data collection and processing component configured to interface with an on-board diagnostic computer in said vehicle and/or configured to interface with one or more of sensors mounted on said vehicle; and
ii) a wireless communications component being communicatively coupled to said management component over a network and configured to transmit logged data from said data collection and processing component to said management component;
wherein said on-board diagnostic computer and/or said sensors are configured to monitor a set of operational parameter values of said vehicle; said operational parameters comprising:
- real time weight of the vehicle;
- real time energy source, such as fuel or electricity, consumption;
- real time type of energy source consumption;
- real time velocity of the vehicle;
- real time distance traveled by the vehicle from last recorded stop; and
- real time distance traveled by the vehicle from start of journey:
wherein said data collection and processing component is further configured to compute, based on said received data, a carbon dioxide emission of an individual vehicle delivery of tangible goods and to log data comprising said calculations.

2. The system according to claim 1, wherein said data collection and processing component is configured to couple said logged data a) with a code for said tangible goods.

3. The system according to claim 2, wherein said data collection and processing component is configured to couple said logged data b) with a code for said vehicle, such as the VIN, license plate, or an arbitrary code made by the user and/or with a code for the driver of said vehicle.

4. The system according to any one of the claims 1-3, wherein said data collection and processing component is configured to receive information from said management component about an expected carbon dioxide emission of an individual vehicle delivery of tangible goods to a specific address.

5. The system according to any one of the claims 1-4, wherein said on-board diagnostic computer and/or said sensors are further configured to monitor a set of operational parameter values of said vehicle; said operational parameters comprising:
- real time engine revolutions per minute;
- real time air resistance;
- real time rolling resistance;
- real time cartographic data about the route of the vehicle; and/or
- real time weather conditions along the route of the vehicle;
wherein said data collection and processing component, in order to reduce the carbon dioxide emission of an individual vehicle delivery of tangible goods to a specific address, is configured to determine, based on said real time operational parameters regarding the forward travel of the vehicle, a position of the vehicle along the route of the vehicle delivery at which a retardation of the vehicle under the action of engine brake or free running of said vehicle is to occur; wherein said data collection and processing component is further configured to determine, based on said real time operational parameters regarding the forward travel of the vehicle, a position of the vehicle along the route of the vehicle delivery at which an elimination of said retardation of the vehicle under the action of engine brake or free running of said vehicle is to occur.

6. The system according to claim 5, further comprising a display component (400), such as a touch screen or stylus-activated screen, adapted for being worn by a user and/or for being mounted in the driver compartment of said vehicle (10); said display (400) configured for displaying an instruction from said data collection and processing component about when the user should either activate or eliminate a user action on retardation of the vehicle, said action using engine brake or free running of said vehicle, thereby reducing the carbon dioxide emission of an individual vehicle delivery of tangible goods to a specific address.

7. The system according to any one of the claims 5-6, wherein the position of the vehicle along the route of the vehicle delivery at which a retardation of the vehicle under the action of engine brake or free running of said vehicle is to occur includes positions a) close to a zone where a lower speed limit is required, b) close to road curves, c) close to a roundabout, and/or d) close to zones with the presence of speed cameras.

## Patentansprüche

1. System zum Schätzen der Kohlendioxid-Emission einer einzelnen Fahrzeuglieferung von materiellen Gütern an eine spezielle Adresse, wobei das Fahrzeug mehrere materielle Güter für verschiedene Adressen enthält; wobei das System Folgendes umfasst:
- eine Verwaltungskomponente, die Teil einer Cloud-Plattform ist; und
- eine auf dem Fahrzeug montierte Mastervorrichtung; wobei die Mastervorrichtung Folgendes umfasst:
a) einen Speicher, der ausführbare Komponenten speichert; und
b) einen Prozessor, der operativ mit dem Speicher gekoppelt ist, wobei die ausführbaren Komponenten Folgendes umfassen:
i) eine Datenerfassungs- und -verarbeitungskomponente, die dazu konfiguriert ist, mit einem Borddiagnosecomputer in dem Fahrzeug verbunden zu sein und/oder dazu konfiguriert ist, mit einem oder mehreren an dem Fahrzeug angebrachten Sensoren verbunden zu sein; und
ii) eine drahtlose Kommunikationskomponente, die über ein Netzwerk mit der Verwaltungskomponente kommunikativ gekoppelt ist und dazu konfiguriert ist, protokollierte Daten von der Datenerfassungs- und -verarbeitungskomponente an die Verwaltungskomponente zu übermitteln;
wobei der Borddiagnosecomputer und/oder die Sensoren dazu konfiguriert sind, eine Reihe von Betriebsparameterwerten des Fahrzeugs zu überwachen; wobei die Betriebsparameter Folgendes umfassen:
- Echtzeitgewicht des Fahrzeugs;
- Echtzeitverbrauch der Energiequelle, wie Kraftstoff oder Strom;
- Art des Energiequellenverbrauchs in Echtzeit;
- Echtzeitgeschwindigkeit des Fahrzeugs;
- Echtzeitstrecke, die das Fahrzeug seit dem letzten aufgezeichneten Stopp zurückgelegt hat; und
- Echtzeitstrecke, die das Fahrzeug seit dem Start der Fahrt zurückgelegt hat;
wobei die Datenerfassungs- und -verarbeitungskomponente ferner dazu konfiguriert ist, basierend auf den empfangenen Daten eine Kohlendioxid-Emission einer einzelnen Fahrzeuglieferung von materiellen Gütern zu berechnen und Daten, die diese Berechnungen umfassen, zu protokollieren.

2. System nach Anspruch 1, wobei die Datenerfassungs- und - verarbeitungskomponente dazu konfiguriert ist, die protokollierten Daten a) mit einem Code für die materiellen Güter zu koppeln.

3. System nach Anspruch 2, wobei die Datenerfassungs- und - verarbeitungskomponente dazu konfiguriert ist, die protokollierten Daten b) mit einem Code für das Fahrzeug, wie der FIN, dem Kennzeichen oder einem durch den Benutzer festgelegten beliebigen Code und/oder mit einem Code für den Fahrer des Fahrzeugs zu koppeln.

4. System nach einem der Ansprüche 1 bis 3, wobei die Datenerfassungs- und -verarbeitungskomponente dazu konfiguriert ist, von der Verwaltungskomponente Informationen über eine zu erwartende Kohlendioxid-Emission einer einzelnen Fahrzeuglieferung von materiellen Gütern an eine spezielle Adresse zu empfangen.

5. System nach einem der Ansprüche 1 bis 4, wobei der Borddiagnosecomputer und/oder die Sensoren ferner dazu konfiguriert sind, eine Reihe von Betriebsparameterwerten des Fahrzeugs zu überwachen; wobei die Betriebsparameter Folgendes umfassen:
- Echtzeitmotordrehzahl pro Minute;
- Echtzeitluftwiderstand;
- Echtzeit-Rollwiderstand;
- Echtzeit-Kartografiedaten über die Route des Fahrzeugs; und/oder
- Echtzeit-Wetterbedingungen entlang der Route des Fahrzeugs; wobei die Datenerfassungs- und -verarbeitungskomponente, um die Kohlendioxid-Emission einer einzelnen Fahrzeuglieferung von materiellen Gütern an eine spezielle Adresse zu reduzieren, dazu konfiguriert ist, basierend auf den Echtzeit-Betriebsparametern bezüglich der Vorwärtsfahrt des Fahrzeugs eine Position des Fahrzeugs entlang der Route der Fahrzeuglieferung zu bestimmen, an der eine Verzögerung des Fahrzeugs unter der Wirkung der Motorbremse oder durch Freilauf eintreten wird; wobei die Datenerfassungs- und -verarbeitungskomponente ferner dazu konfiguriert ist, basierend auf den Echtzeit-Betriebsparameter bezüglich der Vorwärtsfahrt des Fahrzeugs eine Position des Fahrzeugs entlang der Route der Fahrzeuglieferung zu bestimmen, an der eine Aufhebung der Verzögerung des Fahrzeugs unter der Wirkung der Motorbremse oder durch Freilauf des Fahrzeugs eintreten wird.

6. System nach Anspruch 5, ferner umfassend eine Anzeigekomponente (400), wie einen Touchscreen oder einen mit einem Stift bedienbaren Bildschirm, der zum Tragen durch einen Benutzer und/oder zum Anbringen in dem Fahrerraum des Fahrzeugs (10) angepasst ist; wobei die Anzeige (400) dazu konfiguriert ist, eine Anweisung der Datenerfassungs- und - verarbeitungskomponente anzuzeigen, wann der Benutzer eine Benutzerwirkung zur Verzögerung des Fahrzeugs aktivieren oder beenden soll, wobei die Wirkung die Motorbremse oder den Freilauf des Fahrzeugs nutzt, um die Kohlendioxid-Emission einer einzelnen Fahrzeuglieferung von materiellen Waren an eine spezielle Adresse zu reduzieren.

7. System nach einem der Ansprüche 5 bis 6, wobei die Position des Fahrzeugs entlang der Route der Fahrzeuglieferung, an der eine Verzögerung des Fahrzeugs unter der Wirkung der Motorbremse oder durch Freilauf des Fahrzeugs eintreten wird Positionen a) in der Nähe einer Zone, in der eine niedrigere Geschwindigkeitsbegrenzung vorgeschrieben ist, b) in der Nähe von Straßenkurven, c) in der Nähe eines Kreisverkehrs und/oder d) in der Nähe von Zonen mit der Anwesenheit von Geschwindigkeitskameras, beinhaltet.

## Revendications

1. Système d'estimation de l'émission de dioxyde de carbone d'un véhicule individuel livraison de biens corporels à une adresse spécifique, ledit véhicule transportant plusieurs biens corporels destinés à différentes adresses ; ledit système comprenant :
- un composant de gestion faisant partie d'une plateforme en nuage ; et
- un dispositif maître monté sur ledit véhicule ; dans lequel ledit dispositif maître comprend :
a) une mémoire qui stocke des composants exécutables ; et
b) un processeur, couplé de manière opérationnelle à ladite mémoire,
lesdits composants exécutables comprenant :
i) un composant de collecte et de traitement de données configuré pour s'interfacer avec un ordinateur de diagnostic embarqué dans ledit véhicule et/ou configuré pour s'interfacer avec un ou plusieurs capteurs montés sur ledit véhicule ; et
ii) un composant de communication sans fil qui est couplé de manière communicative audit composant de gestion sur un réseau et configuré pour transmettre des données enregistrées depuis ledit composant de collecte et de traitement de données vers le ledit composant de gestion ;
dans lequel ledit ordinateur de diagnostic embarqué et/ou lesdits capteurs sont configurés pour surveiller un ensemble de valeurs de paramètres opérationnels dudit véhicule ; lesdits paramètres opérationnels comprenant :
- un poids en temps réel du véhicule ;
- une consommation en temps réel de source d'énergie, telle que le carburant ou l'électricité ;
- un type de source d'énergie consommée en temps réel ;
- une vitesse en temps réel du véhicule ;
- une distance en temps réel parcourue par le véhicule depuis le dernier arrêt enregistré ; et
- une distance en temps réel parcourue par le véhicule depuis le début du trajet ;
dans lequel ledit composant de collecte et de traitement de données est en outre configuré pour calculer, sur la base desdites données reçues, une émission de dioxyde de carbone d'un véhicule individuel livraison de biens corporels et pour enregistrer les données comprenant lesdits calculs.

2. Système selon la revendication 1, dans lequel ledit composant de collecte et de traitement de données est configuré pour coupler lesdites données enregistrées a) avec un code pour lesdits biens corporels.

3. Système selon la revendication 2, dans lequel ledit composant de collecte et de traitement de données est configuré pour coupler lesdites données enregistrées b) avec un code pour ledit véhicule, tel que le VIN, la plaque d'immatriculation ou un code arbitraire créé par l'utilisateur et/ou avec un code pour le conducteur dudit véhicule.

4. Système selon l'une quelconque des revendications 1 à 3, dans lequel ledit composant de collecte et de traitement de données est configuré pour recevoir des informations en provenance dudit composant de gestion concernant une émission de dioxyde de carbone attendue d'un véhicule individuel livraison de biens corporels à une adresse spécifique.

5. Système selon l'une quelconque des revendications 1 à 4, dans lequel ledit ordinateur de diagnostic embarqué et/ou lesdits capteurs sont en outre configurés pour surveiller un ensemble de valeurs de paramètres opérationnels dudit véhicule ; lesdits paramètres opérationnels comprenant :
- des tours par minute de moteur en temps réel ;
- une résistance de l'air en temps réel ;
- une résistance au roulement en temps réel ;
- des données cartographiques en temps réel concernant l'itinéraire du véhicule ; et/ou
- des conditions météorologiques en temps réel le long de l'itinéraire du véhicule ;
dans lequel ledit composant de collecte et de traitement de données, afin de réduire l'émission de dioxyde de carbone d'un véhicule individuel livraison de biens corporels à une adresse spécifique, est configuré pour déterminer, sur la base desdits paramètres opérationnels en temps réel relatifs à la progression du véhicule, une position du véhicule le long de l'itinéraire du véhicule livraison à laquelle un ralentissement du véhicule, par l'action du frein moteur ou par la mise en marche libre dudit véhicule, doit se produire ; dans lequel ledit composant de collecte et de traitement de données est en outre configuré pour déterminer, sur la base desdits paramètres opérationnels en temps réel relatifs à la progression du véhicule, une position du véhicule le long de l'itinéraire du véhicule livraison à laquelle une suppression dudit ralentissement du véhicule, par l'action du frein moteur ou par la mise en marche libre dudit véhicule, doit se produire.

6. Système selon la revendication 5, comprenant en outre un composant d'affichage (400), tel qu'un écran tactile ou un écran activé par stylet, adapté pour être porté par un utilisateur et/ou pour être monté dans le compartiment de conducteur dudit véhicule (10) ; ledit affichage (400) étant configuré pour afficher une instruction à partir dudit composant de collecte et de traitement de données concernant le moment auquel l'utilisateur doit activer ou supprimer une action utilisateur de ralentissement du véhicule, ladite action utilisant le frein moteur ou la mise en marche libre dudit véhicule, réduisant ainsi l'émission de dioxyde de carbone d'un véhicule individuel livraison de biens corporels à une adresse spécifique.

7. Système selon l'une quelconque des revendications 5 et 6, dans lequel la position du véhicule le long de l'itinéraire du véhicule livraison à laquelle un ralentissement du véhicule, par l'action du frein moteur ou de la mise en marche libre dudit véhicule, doit se produire comporte des positions a) à proximité d'une zone où une limite de vitesse inférieure est requise, b) à proximité de virages de route, c) à proximité d'un rond-point et/ou d) à proximité de zones où se trouvent des radars de vitesse.
